# EUROPEAN PATENT SPECIFICATION

(11) **EP 2 794 179 B1**
(45) Date of publication and mention of the grant of the patent: **23.11.2022**
(21) Application number: 12860680.3
(22) Date of filing: 19.12.2012
(51) Int. Cl.: B23K 26/38, B23K 26/40, B23K 31/00, B23K 103/00, B23K 103/16, B23K 26/386

(54) **HIGH POWER FIBER LASER EFFUSION HOLE DRILLING APPARATUS AND METHOD OF USING SAME**
HOCHLEISTUNGS-FASERLASEREFFUSIONS-BOHRVORRICHTUNG UND VERWENDUNGSVERFAHREN DAFÜR
APPAREIL DE PERÇAGE DE TROU D'EFFUSION À LASER À FIBRE DE FORTE PUISSANCE ET SON PROCÉDÉ D'UTILISATION

(30) Priority: 20.12.2011 US 201161577730 P
(43) Date of publication of application: 29.10.2014
(73) Proprietor: IPG Photonics Corporation, Oxford, Massachusetts 01540 (US)
(72) Inventor: SHINER, William, Oxford, MA 01540 (US); MAYNARD, Steven, Oxford, MA 01540 (US)
(74) Representative: Kohlmann, Kai
(86) International application number: PCT/US2012/070474
(87) International publication number: WO 2013/096374

(56) References cited:
- EP-A1- 0 826 457
- US-A- 5 493 096
- US-A- 5 609 779
- US-A1- 2002 190 039
- US-A1- 2006 169 677
- US-B1- 6 339 879
- Unknown: "Six New Orders Show Turbine Manufacturers' Progress with Laser", , 12 January 2011 (2011-01-12), XP002755610, Retrieved from the Internet: URL:http://weldingdesign.com/equipment-aut omation/main/laserdyne-turbines-0112 [retrieved on 2016-03-17]
- Dr. Thomas Maloney, Dr. Jeffrey Dalton, and Mr Phillip Churchill: "National Aerospace Leadership Initiative Phase II", , March 2010 (2010-03), XP002755624, Retrieved from the Internet: URL:http://www.google.nl/url?sa=t&rct=j&q= &esrc=s&source=web&cd=27&ved=0ahUKEwj9wK69 28fLAhWFqw4KHTvkAI04FBAWCEMwBg&url=http%3A %2F%2Fwww.dtic.mil%2Fget-tr-doc%2Fpdf%3FAD %3DADA550359&usg=AFQjCNG9pzGTUlTaa4mqmONe6 X6PGQRsUA [retrieved on 2016-03-17]

## Description

### BACKGROUND OF THE DISCLOSURE

### Field of the Disclosure

The disclosure relates to high power fiber laser devices used for treating aerospace engine materials. In particular, the disclosure relates to a high power pulsed fiber laser system for drilling holes/passages in aerospace materials and a method of efficient and repetitive drilling of substantially uniform holes using the high power pulsed fiber laser.

### Prior Art Discussion

Laser machining including drilling is a fusion process where the base material that is not vaporized or removed during the liquid state resolidifies and becomes a recast layer. In the case of the conventional laser drilling process, a recast layer is usually formed from the resolidified molten material at the side walls of the drilled holes. Recast layers are particularly undesirable where drilled holes/passages are traversed by a cooling medium. The industry standard requires a recast layer to be about 01,27 mm thick or less. But even this thin of a recast layer is highly undesirable.

Rapid solidification of processed metal results in micro-cracks that often extend into the parent material. The acceptable width of micro-cracks in the industry is about 0,04064 mm. Yet, as miniscule the acceptable width is, such micro-cracks tend to reduce part life.

Aerospace gas turbines require a large number of small diameter holes (<1 mm) to provide cooling in the turbine blades, nozzle guide vanes, combustion chambers and afterburner. Many thousands of holes are introduced in the surface of these components to allow a film of cooling air to flow over the components when the turbines are operating. Film cooling both extends the life of the component and enables extra performance to be achieved from the engine. A typical modem engine will have - 100,000 such holes/passages. Drilling these cooling holes by high peak power pulsed Nd-YAG laser is now well established even though the recast and micro-cracking problems remain largely unresolved.

As one of ordinary skill in the laser arts knows, every type of laser has its advantages and disadvantages in the context of specific purposes, such as providing aerospace components with a plurality of holes. Referring specifically to Nd-YAG lasers, the advantages include, among others, good coupling of radiation in a 1 µm wavelength range into part and high pulse energies and peak powers.

However, a single mode ("SM") Nd-YAG laser is also known to have limitations that may not always render its use in the aerospace industry efficient because its performance drifts. For example, the power distribution across the laser beam may not always be homogeneous due to a typically used Gaussian beam having a small radius dome-shaped cross-section. Furthermore, a pulse width may fluctuate: Equally troubling is the difficulty of controlling peak- to-peak powers of respective subsequent pulses. Accordingly, drilled holes, in addition to typical recast layers and micro-cracks, may have different roundness, consistency and, therefore, may not be of the desired quality which the industry demands.

A further limitation may relate to a relatively low frequency of pulsing due to limitations in the flash lamps and power supplies which are typically designed for low repetition rates and high peak powers per pulse. As a general rule, trying to increase the repetition rate results in a sharp decrease in maximum power per pulse. With the current demand for higher power and higher repetition rates, currently used Nd-YAG lasers may not meet these requirements.

Furthermore, traditional Nd-YAG lasers, as one of ordinary skill in the laser art knows, have a complex cavity design typically requiring a directly cooled crystal rod that is sealed with 0-rings in an enclosed water jacket. There are many extra-cavity optic elements required to correct for thermal distortion in the Nd:YAG rod. All these elements must be properly maintained, which requires a complex controlling means; otherwise, thermal instability inside and outside the cavity may result in noticeable differences in beam output characteristics leading to drilled passages with markedly different recast thicknesses and therefore poor uniformity.

Dr. Thomas Maloney, Dr. Jeffrey Dalton, and Mr Phillip Churchill: "National Aerospace Leadership Initiative Phase II - Final report", discloses drilling techiques using a 10 kW fiber laser.

A need therefore exists for a laser treated workpiece provided with a plurality of uniform passages so that an average recast layer, if formed at all, is substantially thinner than the industry standard.

Another need exists for a laser treated workpiece provided with a plurality of uniform passages so that base crack depth levels in the components are lower than the industry standard. Another need exists for a fiber laser system configured so that a plurality of uniform passages, laser drilled in a workpiece, have respective peripheries formed with minimal recast layers and microcracks which have respective levels lower than the industry established standards.

Another need exists for a method of laser drilling a plurality of passages in a workpiece so that recast layer and base micro-crack levels, if formed on peripheries of respective passages, are substantially lower than respective industry standards.

Another need exists for a method of laser drilling a plurality of passages in a workpiece so that the uniformity of the diameter of the passage diameters are substantially lower than respective industry standards.

### SUMMARY OF THE DISCLOSURE

The above and other needs are met by the teaching provided by the present invention. In particular, this disclosure teaches a method of drilling passages in an aerospace material workpiece and a system for practicing the method. The system is so configured and the method is so practiced that the body of the workpiece is provided with a plurality of substantially uniform passages having better quality than that offered by the current Nd:YAG technology in the aerospace industry.

In accordance with one aspect of the disclosure, a method of drilling passages in an aerospace material workpiece is provided, the method comprising: controllably displacing the workpiece and a single mode high power fiber laser relative to one another among a plurality of predetermined locations along a path, wherein the fiber laser includes a plurality of separate laser modules each provided with an Ytterbium (YB) oscillator operative to output at about 500 W or higher; periodically firing the fiber laser at each of the locations, thereby outputting at least one pulse incident on the location so as to drill a plurality of through-going spaced passages in the workpiece, the periodic firing of the fiber laser includes either outputting single one pulse per each location, the one pulse being shaped and configured to drill an entire passage, wherein the one pulse at each location has a pulse width of about 10 milliseconds, a square shape, a peak power varying between 6 kW and about 20 kW; or outputting a plurality of pulses per each location at a repetition rate varying between about 25 Hz and about 50 Hz, wherein the outputting of the plurality of pulses includes configuring uniform square pulses each having a pulse width between 0.5 to about 3 milliseconds, wherein the pulses have a stable uniform pulse-to-pulse rate and uniform peak power and wherein the outputting of the uniform square pulses per each location occurs in substantially a fundamental mode having substantially uniform parameters which include an M² value, focal point, spot size, and peak power ranging between about 6 kW and about 20 kW.

Inaccordance with a further aspect of the disclosure, a laser system for drilling a body of an aerospace material workpiece is provided, the laser system comprising a high power Yb fiber laser, wherein the fiber laser includes a plurality of separate laser modules each provided with an Ytterbium (YB) oscillator operative to output at about 500 W or higher and wherein the fiber laser emits a plurality of discrete pulses at a repetition rate between about 25 and about 50 Hz, wherein the outputting of the plurality of pulses includes configuring uniform square pulses each having a pulse width between 0.5 to about 3 milliseconds and wherein the pulses have a stable uniform pulse-to-pulse rate and uniform peak power varying between about 6 kW and 20 kW incident on selected locations on the body and configured to provide a plurality of through-going and substantially uniform spaced passages at respective locations, the passage each being defined by a periphery.

### BRIEF DESCRIPTION OF THE DRAWINGS

The above and other features and advantages of the disclosed method and system will become more readily apparent from the specific description accompanied by the following drawings, in which:
FIG. 1 is a diagrammatic view of the disclosed fiber laser system.
FIG. 2 is a workpiece having a plurality of passages which are provided in accordance with the disclosed method and system practicing the disclosed method.
FIGs.3-7 are computer generated shots illustrating respective micro-cracks obtained with differently configured pulses which are emitted by the disclosed system and method.
FIG. 8 is a chart summarizing the results illustrated in FIGS. 3-7 and comparing these results with industry standard.
FIGs. 9-13 are respective computer generated shots illustrating recast layers produced under different operating conditions of the fiber laser system of FIG. 1.
FIG. 14 is a chart illustrating the results shown in FIGS. 9-13, respectively, and compared to the industry standard.

Reference will now be made in detail to several embodiments of the invention that are illustrated in the accompanying drawings. Wherever possible, same or similar reference numerals are used in the drawings and the description to refer to the same or like parts or steps. Certain drawings are in simplified form and are not to precise scale. The word "couple" and similar terms do not necessarily denote direct and immediate connections, but also include connections through intermediate elements or devices.

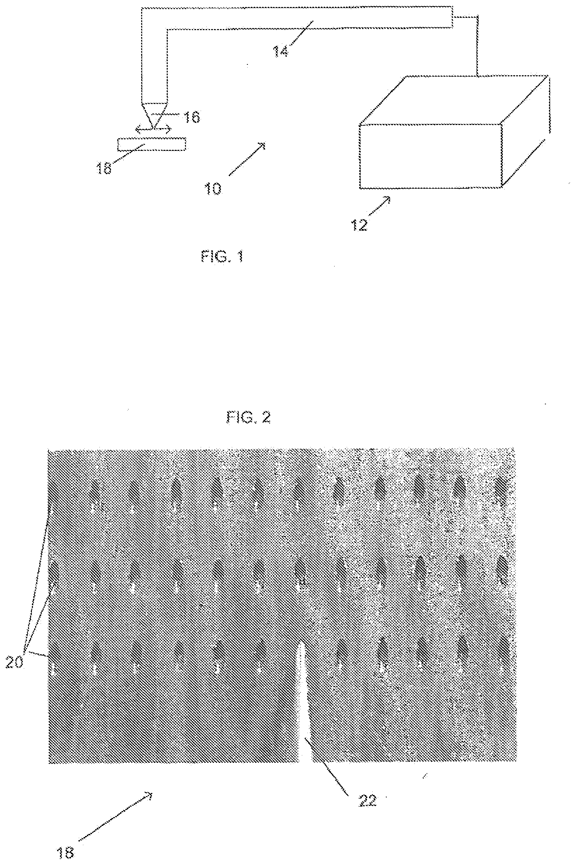

FIG. 1 illustrates a fiber laser drilling system 10 including a high power fiber laser 12, a beam delivery system 14 typically having beam guiding optics which guides the laser output beam to a laser head 16. The latter is operative to focus the beam on the desired location of a workpiece 18 and typically has up to twelve (12) degrees of freedom so as to allow for convenient displacement of the head and workpiece relative to one another along a predetermined path over a plurality of locations corresponding to respective passages to be drilled as provided by X product available from Y company from (Z address)

The fiber laser 12 includes a plurality of separate laser modules each provided with an Ytterbium ("Yb") oscillator operative to output at about 500 W or higher. The configuration may be altered by utilizing known to one of ordinary skill in the laser art master oscillator and power amplifier ("MOPA") schematics. Preferably, the laser is a model YLRxxxx available from IPG Photonics Corporation, Oxford, MA.

The cumulative output of the modules -system light - can easily reach a multi-kW level ranging between about 10 kW and about 20 kW and higher. The Yb fiber laser 12 is configured to emit square-shaped pulses at a repetition rate between about 25 Hz and about 50 Hz in low multimode ("MM") radiation at wavelengths around 1070 nm. The system light has a stable, low beam product parameter ("BPP") which ranges from about 3 to about 5 and an M² value roughly around 10.

Referring to FIG. 2, specific parameters of Yb fiber laser 12 within the above-disclosed ranges are so selected that all of the drilled passages 20 are clean, free of surface splatter and have substantially uniform diameter, taper, passage entrance and clean passage exit. In other words, the pulses have a stable uniform pulse-to-pulse rate, uniform amplitude or peak power and uniform square pulse shape all leading to the formation of substantially uniform passages.

FIG 2. Provides a workpiece 18 with oval passages having a major axis of x and a minor axis of diameter at the top surface with a standard deviation of z. The area of the surface removed by the oval equaling Aoval.

The foregoing results required by many industries including the aerospace industry have been achieved with the above-disclosed laser system treating workpiece 18 which is made from aluminum, ceramic, metallo ceramics, nickel and nickel alloys including but not limited to Hastelloy^{®} variants, Inconel^{®} variants including Inconel^{®} 625, Inconel^{®} 718, Mar-M variants, Single Crystal, carbon steels, stainless steels, Titanium and/or Waspalloy^{®} variants and various oxides, alloys and combinations of these.

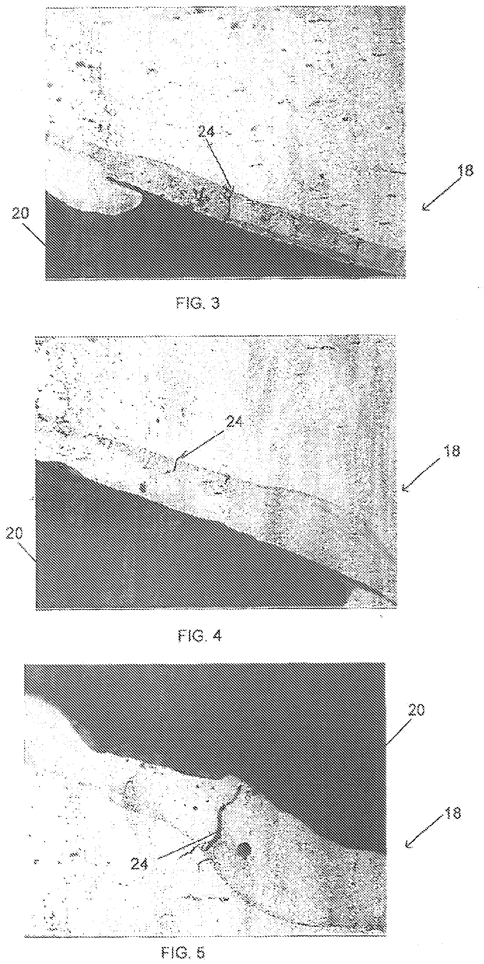

Referring to FIGS. 3-7, the importance of disclosed system 10 of FIG. 1 becomes readily apparent from experimental results including the formations and dimensions of recast layers and- micro cracks in workpiece 18 which may be configured, without any limitation, as turbine blades, nozzle, guide vanes, combustion chambers and afterburner and others. The following parameters are common to all of the experiments shown in respective FIGs. 3-6 and include laser system 10 outputting fifteen (15) square pulses at a repetition rate 25 Hz and with at 15 kW peak power per each pulse.
Despite different pulse with, as disclosed below, an average time necessary for drilling the passage is about 6 seconds. What were the materials?

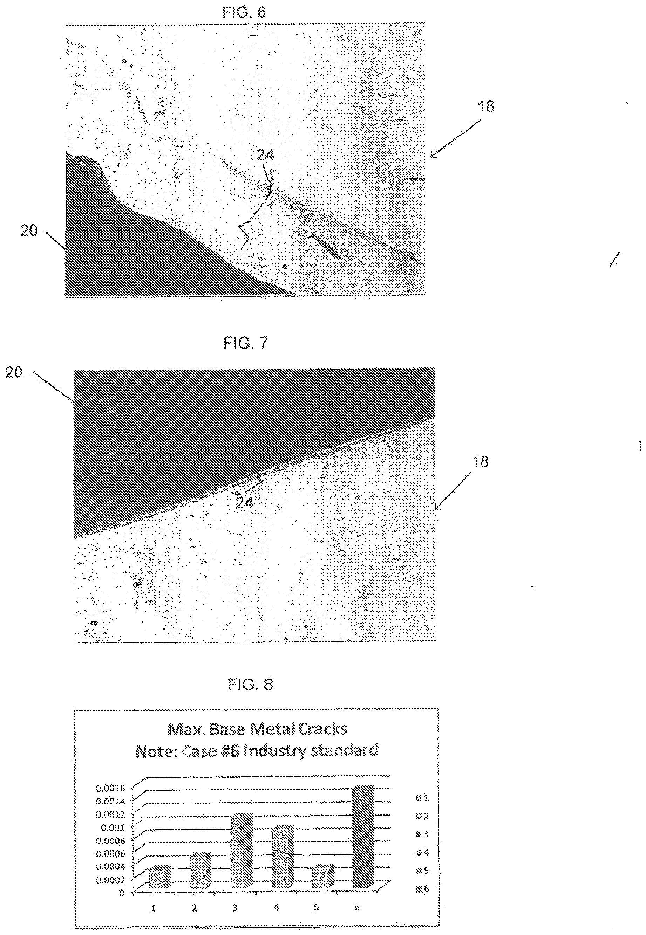

Referring specifically to FIGs. 3 and 8, system 10, which is configured with the above- listed parameters, produces a microcrack 24 on a wall of passage 20 in workpiece 18. The pulse width in this experiment is about 0.5 milliseconds. This experiment shown in FIG. 8 as 1 results microcrack 24 having a width of about 0,01016 mm.

Referring specifically to FIGs. 4 and 8, system 10 is operative to output pulses each having a pulse width of 1 millisecond. Denoted by numeral reference 2 in FIG. 8, microcrack 24 is produced with about 0,01524 mm width.

FIG. 5 illustrates the results of a pulse width of about 2 milliseconds. The result of this experiment is referenced by numeral 3 in FIG. 8 and includes the width of microcrack 24 of about 0,0254 mm.

FIG. 6 illustrates the results produced by drilling workpiece 18 with laser system 10 operative to emit square pulses each with pulse width of about 3 milliseconds. This experiment corresponds to reference numeral 4 in FIG. 8 and results in about 0,02032 mm width.

FIG. 7 illustrates microcrack 24 formed with parameters which are somewhat different from previous four experiments. In particular, instead of a pulse train, system 10 fires a single 10 millisecond pulse, which is not available from Nd-YAG lasers. As can be seen in FIG. 8, under reference numeral 5, the result, 0,00508 mm width, is substantially the same as in case of the shortest pulse width of 0.5 milliseconds in experiment 1. However, in contrast to all previous settings, the drill time per passage in this experiment is about 0.05 milliseconds which is substantially shorter than 0.6 milliseconds needed in previous experiments.

FIG. 8 clearly illustrates the advantages of using system of the present disclosure. Compared to aerospace standard of about 0,3556 mm denoted by reference numeral 6, even the worst result obtained in experiment 3 by disclosed fiber laser system 10 is considerably better than the standard.

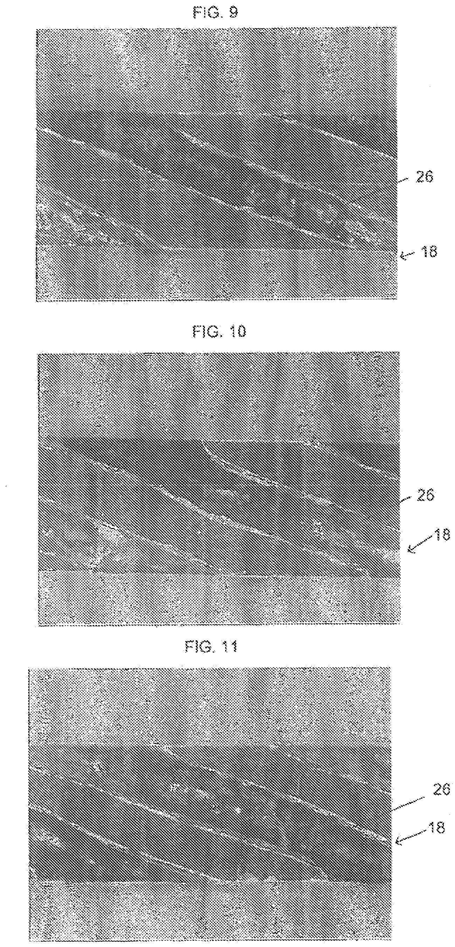

Referring now to FIGS. 9-14, laser system 10 configured with the same parameters as disclosed in reference to FIGs. 3-8 also shows a substantially improved recast layer's thickness compared to the aerospace industry's standard.

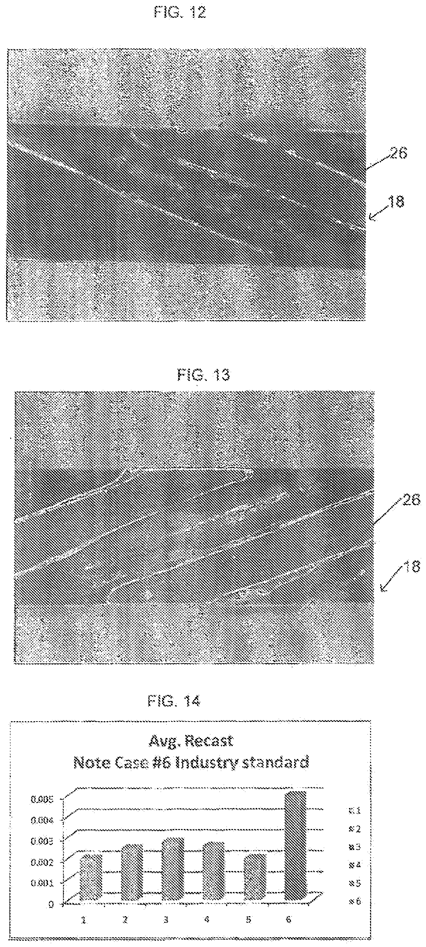

In particular, the same five experiments corresponding to respective pulse widths 0.5, 1.0, 2.0, 3.0 and single pulse of 10 milliseconds have been conducted and resulted in a recast layer 26 clearly seen in respective FIGs. 9-13. FIG. 14 illustrates the results of five experiments referenced by respective numerals 1, 2, 3, 4 and 5 and reference numeral 6 being the industry standard.

As can be seen from FIG. 14, first three experiments with respective pulse widths 0.5, 1.0 and 2.0 milliseconds produced about 0,04572 mm, 0,05588 mm and 0,0635 mm thick recast layers, respectively. The fourth setting with a 3.0 millisecond pulse width resulted in a recast layer having a thickness of about 0,05588 mm . All of the above experiments produced the respective results, recast layer thickness lower than the standard thickness of about 0,127 mm corresponding to the right end column 6.

The last experiment, number 5, with a single 10 millisecond pulse width again showed to be advantages in many respects and had substantially the same result, 0,04572 mm, as experiment 1 with the shortest pulse width.

## Claims

1. A method of drilling passages in an aerospace material workpiece , comprising:
controllably displacing the workpiece and a single mode high power fiber laser relative to one another among a plurality of predetermined locations along a path, wherein the fiber laser includes a plurality of separate laser modules each provided with an Ytterbium (YB) oscillator operative to output at about 500 W or higher;
periodically firing the fiber laser at each of the locations, thereby outputting at least one pulse incident on the location so as to drill a plurality of through-going spaced passages in the workpiece,
the periodic firing of the fiber laser includes either outputting single one pulse per each location, the one pulse being shaped and configured to drill an entire passage, wherein the one pulse at each location has a pulse width of about 10 milliseconds, a square shape, a peak power varying between 6 kW and about 20 kW;
or outputting a plurality of pulses per each location at a repetition rate varying between about 25 Hz and about 50 Hz, wherein the outputting of the plurality of pulses includes configuring uniform square pulses each having a pulse width between 0.5 to about 3 milliseconds, wherein the pulses have a stable uniform pulse-to-pulse rate and uniform peak power and wherein the outputting of the uniform square pulses per each location occurs in substantially a fundamental mode having substantially uniform parameters which include an M² value, focal point, spot size, and peak power ranging between about 6 kW and about 20 kW.

2. A laser system for drilling a body of an aerospace material workpiece, the laser system comprising a high power Yb fiber laser, wherein the fiber laser includes a plurality of separate laser modules each provided with an Ytterbium (YB) oscillator operative to output at about 500 W or higher and wherein the fiber laser emits a plurality of discrete pulses at a repetition rate between about 25 and about 50 Hz, wherein the outputting of the plurality of pulses includes configuring uniform square pulses each having a pulse width between 0.5 to about 3 milliseconds and wherein the pulses have a stable uniform pulse-to-pulse rate and uniform peak power varying between about 6 kW and 20 kW incident on selected locations on the body and configured to provide a plurality of through-going and substantially uniform spaced passages at respective locations, the passage each being defined by a periphery.,

3. The laser system of claim 2, wherein the fiber laser is so configured that a single discrete pulse has parameters sufficient to drill an entire passage, wherein the single discrete pulse has the parameters including a square shape, pulse width of at least 10 milliseconds, and a peak power of at least 6 kW, the parameters are so selected that the peripheries of the respective passages are tapered at a substantially uniform angle, have a substantially uniform diameter, free from splatter and have a clean and substantially uniform exit and an entrance free from irregularities.

4. The laser system of claim 2, wherein the fiber laser is configured to emit a train of the discrete pulses for a single passage, the pulses each having substantially uniform parameters including a square shape and a pulse width varying between about 0.5 to about 3 milliseconds, the parameters being so selected that the peripheries of the respective passages are tapered at a substantially uniform angle, have a substantially uniform diameter, free from splatter and have a clean and substantially uniform exit and an entrance free from irregularities.

5. The laser system of claim 2, wherein the plurality of laser modules are optically coupled to one another and each having an Ytterbium (YB) oscillator output radiation with a substantially uniform M² value, substantially uniform focal point and spot size, and substantially uniform peak power.

## Patentansprüche

1. Verfahren zum Bohren von Bohrdurchlässen in einem Luftfahrtmaterialwerkstück, umfassend:
steuerbares Verschieben des Werkstücks und eines Einzelmodus-Hochleistungsfaserlasers relativ zueinander unter einer Vielzahl von vorgegebenen Positionen entlang eines Pfads, wobei der Faserlaser eine Vielzahl von separaten Lasermodulen beinhaltet, die jeweils mit einem Ytterbium- (YB) Oszillator versehen sind, der betriebsfähig ist, ungefähr 500 W oder mehr abzugeben;
periodisches Feuern des Faserlasers an jeder der Positionen, wodurch zumindest ein Impuls abgegeben wird, der auf die Position einfällt, um eine Vielzahl von durchgehenden, beabstandeten Durchlässen in dem Werkstück zu bohren,
das periodische Feuern des Faserlasers entweder beinhaltet, einen einzelnen Impuls pro Position abzugeben, wobei der eine Impuls geformt ist und dazu ausgelegt ist, einen gesamten Durchlass zu bohren, wobei der eine Impuls an jeder Position eine Impulsbreite von ungefähr 10 Millisekunden, eine rechteckige Form aufweist, wobei eine Spitzenleistung zwischen 6 kW und ungefähr 20 kW variiert;
oder Abgeben einer Vielzahl von Impulsen pro Position bei einer Wiederholungsrate, die zwischen ungefähr 25 Hz und ungefähr 50 Hz variiert, wobei das Abgeben der Vielzahl von Impulsen beinhaltet, einheitliche Rechteckimpulse zu konfigurieren, die jeweils eine Impulsbreite zwischen 0,5 bis ungefähr 3 Millisekunden aufweisen, wobei die Impulse eine stabile einheitliche Impuls-zu-Impuls-Rate und eine einheitliche Spitzenleistung aufweisen und wobei das Abgeben der einheitlichen Rechteckimpulse pro Position im Wesentlichen in einer Grundmode stattfindet, die im Wesentlichen einheitliche Parameter aufweist, die eine(n) M²-Wert, Brennpunkt, Punktgröße und Spitzenleistung, die von ungefähr 6 kW bis ungefähr 20 kW reicht, beinhalten.

2. Lasersystem zum Bohren eines Körpers eines Luftfahrtmaterialwerkstücks, wobei das Lasersystem einen Hochleistungs-Yb-Faserlaser umfasst, wobei der Faserlaser eine Vielzahl von separaten Lasermodulen beinhaltet, die jeweils mit einem Ytterbium- (YB) Oszillator versehen sind, der betriebsfähig ist, ungefähr 500 W oder mehr abzugeben, und wobei der Faserlaser eine Vielzahl von diskreten Impulsen bei einer Wiederholungsrate zwischen ungefähr 25 und ungefähr 50 Hz emittiert, wobei das Abgeben der Vielzahl von Impulsen beinhaltet, einheitliche Rechteckimpulse zu konfigurieren, die jeweils eine Impulsbreite zwischen 0,5 bis ungefähr 3 Millisekunden aufweisen, und wobei die Impulse eine stabile einheitliche Impuls-zu-Impuls-Rate und eine einheitliche Spitzenleistung aufweisen, die zwischen ungefähr 6 kW und 20 kW variiert, die auf ausgewählte Positionen auf dem Körper einfällt, und dazu ausgelegt sind, eine Vielzahl von durchgehenden und im Wesentlichen einheitlichen beabstandeten Durchlässen an jeweiligen Positionen vorzusehen, wobei jeder Durchlass von einem Umfang definiert wird.

3. Lasersystem nach Anspruch 2, wobei der Faserlaser derart ausgelegt ist, dass ein einzelner diskreter Impuls Parameter aufweist, die ausreichend sind, um einen gesamten Durchlass zu bohren, wobei der einzelne diskrete Impuls die Parameter aufweist, die eine rechteckige Form, Impulsbreite von zumindest 10 Millisekunden und eine Spitzenleistung von mindestens 6 kW beinhalten, wobei die Parameter derart ausgewählt sind, dass die Umfänge der jeweiligen Durchlässe bei einem im Wesentlichen einheitlichen Winkel verjüngt sind, einen im Wesentlichen einheitlichen Durchmesser aufweisen, frei von Spritzern sind und einen sauberen und im Wesentlichen einheitlichen Ausgang und einen Eingang frei von Unregelmäßigkeiten aufweisen.

4. Lasersystem nach Anspruch 2, wobei der Faserlaser dazu ausgelegt ist, eine Folge der diskreten Impulse für einen einzelnen Durchlass zu emittieren, wobei die Impulse jeweils im Wesentlichen einheitliche Parameter aufweisen, die eine rechteckige Form und eine Impulsbreite, die zwischen ungefähr 0,5 bis ungefähr 3 Millisekunden variiert, beinhalten, wobei die Parameter derart ausgewählt sind, dass die Umfänge der jeweiligen Durchlässe bei einem im Wesentlichen einheitlichen Winkel verjüngt sind, einen im Wesentlichen einheitlichen Durchmesser aufweisen, frei von Spritzern sind und einen sauberen und im Wesentlichen einheitlichen Ausgang und einen Eingang frei von Unregelmäßigkeiten aufweisen.

5. Lasersystem nach Anspruch 2, wobei die Vielzahl von Lasermodulen optisch miteinander gekoppelt sind und jeweils eine Ytterbium- (YB) Oszillator-Ausgangsstrahlung mit einem/einer im Wesentlichen einheitlichen M²-Wert, im Wesentlichen einheitlichen Brennpunkt und Punktgröße und im Wesentlichen einheitlichen Spitzenleistung aufweisen.

## Revendications

1. Procédé de perçage de passages dans une pièce d'ouvrage de matériau aérospatial, comprenant :
le déplacement de manière commandée de la pièce d'ouvrage et d'un laser monomodal à fibre haute puissance l'un par rapport à l'autre parmi une pluralité d'emplacements prédéterminés le long d'un trajet, dans lequel le laser à fibre inclut une pluralité de modules laser distincts pourvus chacun d'un oscillateur à ytterbium (YB) opérationnel pour une sortie à environ 500 W ou plus ;
le tir périodique du laser à fibre à chacun des emplacements, en délivrant de ce fait au moins une impulsion incidente sur l'emplacement de manière à percer une pluralité de passages traversants espacés dans la pièce d'ouvrage,
le tir périodique du laser à fibre inclut soit la délivrance d'une seule impulsion à chaque emplacement, l'impulsion étant façonnée et configurée pour percer un passage complet, dans lequel l'impulsion à chaque emplacement présente une largeur d'impulsion d'environ 10 millisecondes, une forme carrée, une puissance de crête variant entre 6 kW et environ 20 kW ;
soit la délivrance d'une pluralité d'impulsions à chaque emplacement à une fréquence de répétition variant entre environ 25 Hz et environ 50 Hz, dans lequel la délivrance de la pluralité d'impulsions inclut la configuration d'impulsions carrées uniformes présentant chacune une largeur d'impulsion entre 0,5 et environ 3 millisecondes, dans lequel les impulsions présentent une fréquence d'impulsion à impulsion uniforme stable et une puissance de crête uniforme et dans lequel la délivrance des impulsions carrées uniformes à chaque emplacement se déroule sensiblement dans un mode fondamental comportant des paramètres sensiblement uniformes qui incluent une valeur M², un point focal, une taille de point et une puissance de crête dans une plage entre environ 6 kW et environ 20 kW.

2. Système laser pour percer un corps d'une pièce d'ouvrage de matériau aérospatial, le système laser comprenant un laser à fibre Yb haute puissance, dans lequel le laser à fibre inclut une pluralité de modules laser distincts pourvus chacun d'un oscillateur à ytterbium (YB) opérationnel pour une sortie à environ 500 W ou plus, et dans lequel le laser à fibre émet une pluralité d'impulsions discrètes à une fréquence de répétition entre environ 25 Hz et environ 50 Hz, dans lequel la délivrance de la pluralité d'impulsions inclut la configuration d'impulsions carrées uniformes présentant chacune une largeur d'impulsion entre 0,5 et environ 3 millisecondes et dans lequel les impulsions présentent une fréquence d'impulsion à impulsion uniforme stable et une puissance de crête uniforme variant entre environ 6 kW et environ 20 kW, sont incidentes à des emplacements sélectionnés et sont configurées pour fournir une pluralité de passages traversants espacés sensiblement uniformes à des emplacements respectifs, chaque passage étant défini par une périphérie.

3. Système laser selon la revendication 2, dans lequel la fibre laser est configurée de sorte qu'une impulsion discrète unique comporte des paramètres suffisants pour percer un passage complet, dans lequel l'impulsion discrète unique comporte les paramètres incluant une forme carrée, une largeur d'impulsion d'au moins 10 millisecondes, et une puissance de crête d'au moins 6 kW, les paramètres sont sélectionnés de sorte que les périphéries des passages respectifs soient effilées à un angle sensiblement uniforme, présentent un diamètre sensiblement uniforme, soient dépourvues d'éclaboussures et comportent une sortie propre sensiblement uniforme et une entrée dépourvue d'irrégularités.

4. Système laser selon la revendication 2, dans lequel le laser à fibre est configuré pour émettre un train des impulsions discrètes pour un passage unique, les impulsions comportant chacune des paramètres sensiblement uniformes incluant une forme carrée et une largeur d'impulsion variant entre environ 0,5 et environ 3 millisecondes, les paramètres étant sélectionnés de sorte que les périphéries des passages respectifs soient effilées à un angle sensiblement uniforme, présentent un diamètre sensiblement uniforme, soient dépourvues d'éclaboussures et comportent une sortie propre sensiblement uniforme et une entrée dépourvue d'irrégularités.

5. Système laser selon la revendication 2, dans lequel la pluralité de modules laser sont couplés optiquement les uns aux autres en ayant chacun un rayonnement de sortie d'oscillateur à ytterbium (YB) avec une valeur M² sensiblement uniforme, un point focal sensiblement uniforme, une taille de point sensiblement uniforme et une puissance de crête sensiblement uniforme.
